Europäisches Patentamt

European Patent Office

Office européen des brevets

(11) Numéro de publication: **0 243 228 B1**

## FASCICULE DE BREVET EUROPEEN

(45) Date de publication de fascicule du brevet:
**10.07.91**

(21) Numéro de dépôt: **87400725.5**

(22) Date de dépôt: **02.04.87**

(51) Int. Cl.⁵: **G06F 15/72**

(54) Système de création d'images notamment de maquettes pour l'impression de documents publicitaires, tels que des emballages, des étiquettes ou autres.

(30) Priorité: **04.04.86 FR 8604867**

(43) Date de publication de la demande:
**28.10.87 Bulletin 87/44**

(45) Mention de la délivrance du brevet:
**10.07.91 Bulletin 91/28**

(84) Etats contractants désignés:
**AT BE CH DE ES GB GR IT LI LU NL SE**

(56) Documents cités:
**EP-A- 0 144 138**
**WO-A-80/02490**
**US-A- 4 357 624**

**Foley, Van Dam: Fundamentals of Interactive Computer Graphics, Addison-Wesley Publishing Company, 1982**

(73) Titulaire: **PUBLIGRAFA**
**Maillot**
**Sens (Yonne)(FR)**

(72) Inventeur: **Breger,Guy Marcel CharlesClaude**
**10 Chemin des Violettes**
**Rosoy Sens (Yonne)(FR)**

(74) Mandataire: **Cabinet Pierre HERRBURGER**
**115, Boulevard Haussmann**
**F-75008 Paris(FR)**

## Description

La présente invention concerne un système de création d'images notamment de maquettes pour l'impression de documents publicitaires, tels que des emballages, des étiquettes ou autres.

Actuellement, la création d'un document publicitaire, tel qu'un emballage ou une étiquette, représente un travail relativement compliqué nécessitant l'intervention de plusieurs spécialistes.

Tout d'abord le graphiste doit faire une maquette plus ou moins approchée du produit définitivement réalisé. En effet, le graphiste combine les diverses informations telles que le texte, les dessins, un fond. Comme le graphiste ne peut à la fois avoir des qualités d'illustrateur, de lettreur, etc..., sa maquette donnera une bonne idée du produit final pour les parties dans laquelle le graphiste excelle alors que les autres parties seront de qualité médiocre. Il est donc difficile d'avoir une impression relativement précise du produit final.

Pour avancer dans son approche, il faut passer au stade de la photogravure. Le photograveur doit en effet interprêter le projet que lui fournit le graphiste. Le photograveur ne dispose pas toujours d'informations précises du graphiste. Ces informations peuvent concerner l'emplacement des différents éléments composant la maquette, la nature des traits ou du graphisme, etc., les couleurs. De ce fait, il faut plusieurs va-et-vient de projets entre le graphiste et l'illustrateur, le compositeur jusqu'à l'établissement d'un projet susceptible d'être tiré en net. Ce projet est alors soumis au publiciste et/ou au client. Ceux-ci peuvent souhaiter des modifications.

Or, pour l'exécution de ces modifications, il est nécessaire de repasser par les différentes étapes décrites ci-dessus.

L'exécution de ladite maquette est alors interprétée pour être imprimée. Pour cela, on redessine manuellement complètement et au net, on assemble les différents éléments du document noir et blanc comportant tous les textes et les illustrations Trait monochrome. On fabrique, à l'aide de techniques très diverses : aérographe, pastel, gouache ... les illustrations couleurs, on prépare les instructions de prise de vue pour l'élaboration des Ektachromes.

Toutes ces opérations d'exécution nécessitent l'intervention et la coordination des différents opérateurs d'exécution très spécialisés. Ces interventions humaines doivent être réalisées en suivant précautionneusement ces différentes étapes longues et coûteuses incompatibles avec les délais et budgets initialement prévus.

Ces différentes opérations demandent beaucoup de temps au préjudice de l'exécution rapide de maquettes publicitaires ou autres.

Selon EP 0 144 138, on connaît un appareil et un procédé de réalisation d'images utilisant une table à numériser et un dispositif de lecture d'images vidéo en technique vidéo.

Ces procédé et appareil sont destinés à la conception de documents dits de sécurité tels que des billets de banque.

Ces moyens connus présentent divers inconvénients dont certains, particulièrement graves, ne permettent pas d'utiliser ces moyens pour des applications comme celles envisagées par la présente invention.

Cette installation connue utilise une table à numériser ; les images ou dessins sont transformés en des signaux numériques et non des informations vectorielles de sorte que le système nécessite une très grande mémoire d'ordinateur. Les images ne peuvent pas être manipulées c'est-à-dire adaptées ou transformées de manière simple comme l'exigent les applications publicitaires de la présente invention.

Pour des raisons similaires, les moyens connus selon ce document antérieur, moyens qui ne sont pas des moyens de tramage mais permettent seulement de réaliser des traits d'une épaisseur de 20 microns, sont uniquement adaptés à l'application à laquelle est destinée cette technique connue : c'est-à-dire la sécurité ou l'infalsiabilité des documents et non leur esthétique. L'utilisation du tramage dans ce système supposerait des moyens permettant la reproduction de valeurs en dégradé. Or, ces moyens ne sont pas prévus dans ce document.

Le procédé et cet appareil connus ne peuvent donc être envisagés pour la création d'images ou de maquettes publicitaires car les images et maquettes obtenues ne seraient nullement utilisables dans la création publicitaire ; on ne pourrait pas non plus décliner une image d'emballage pour avoir une idée d'ensemble.

La présente invention a pour but de créer un moyen permettant de créer des maquettes et des films graphiques nécessaires à l'impression sur des matériaux d'emballages ou des films graphiques pour l'impression en héliogravure, donnant immédiatement à la conception même de l'image une idée extrêmement précise de l'image très proche de l'image définitive et simplifiant l'intervention humaine et la limitant à des opérations de conception et de traitement indépendant de l'habileté artistique du manipulateur, pour permettre de juger immédiatement les qualités de la maquette.

A cet effet, l'invention comme revendiquée, concerne un système de création d'images notamment de maquettes pour l'impression de documents publicitaires, tels que des emballages, des étiquettes, etc..., système caractérisé en ce qu'il comprend :

- au moins un dispositif de lecture d'images en technique vidéo, au moins une console graphique image avec un clavier de commande, une table graphique et un écran de contrôle ainsi qu'un ordinateur de gestion de la console, des moyens de tramage,

des moyens d'impression de l'image sur des supports, l'ordinateur de gestion de la console graphique étant programmé pour combiner les images binaires et les images vectorielles des moyens de lecture d'images et de la table graphique.

Le système permet de recevoir facilement toute image existante pour la travailler, la combiner à d'autres images existantes également introduites dans le système, pour en prendre des extraits, modifier l'échelle, le découpage, le contraste, les couleurs, insérer des inscriptions et des figures géométriques, effectuer des décalages, rotations, translation d'une partie ou de la totalité de l'image, etc...

Ces transformations et combinaisons sont effectuées par le seul graphiste qui n'a pas à avoir de qualités d'illustrateur, de lettreur, etc... puisque toutes ces informations existent dans la machine et peuvent être choisies à l'aide de la console graphique soit peuvent être introduites par le moyen de balayage de lecture (ou moyen de lecture) ou la caméra vidéo ou la table graphique.

Le graphiste voit immédiatement le résultat de son traitement soit sur l'écran du moniteur de la console graphique image, soit en imprimant ou en tirant un film sur le champ à l'aide de l'imprimante ou du moyen de balayage de reproduction (ou moyen de reproduction).

Grâce à ce système, le publiciste et le client peuvent immédiatement examiner une maquette nette, proche de tirage définitif, tant par la forme que par les couleurs. Les modifications souhaitées peuvent être immédiatement décidées et apportées à la maquette.

De plus, il est possible de multiplier l'image sur l'écran pour obtenir un effet de masse, analogue à l'effet produit par des emballages disposés dans un rayon de vente.

Il est également possible d'inscrire la maquette dans les différents contours des emballages de la gamme de produits à laquelle cette maquette est destinée.

Les éléments visualisés par le graphiste sont suffisamment bien définis pour être utilisés en l'état, pour la phase de réalisation des documents d'exécution, des ozalids de contrôle et des films de photogravure.

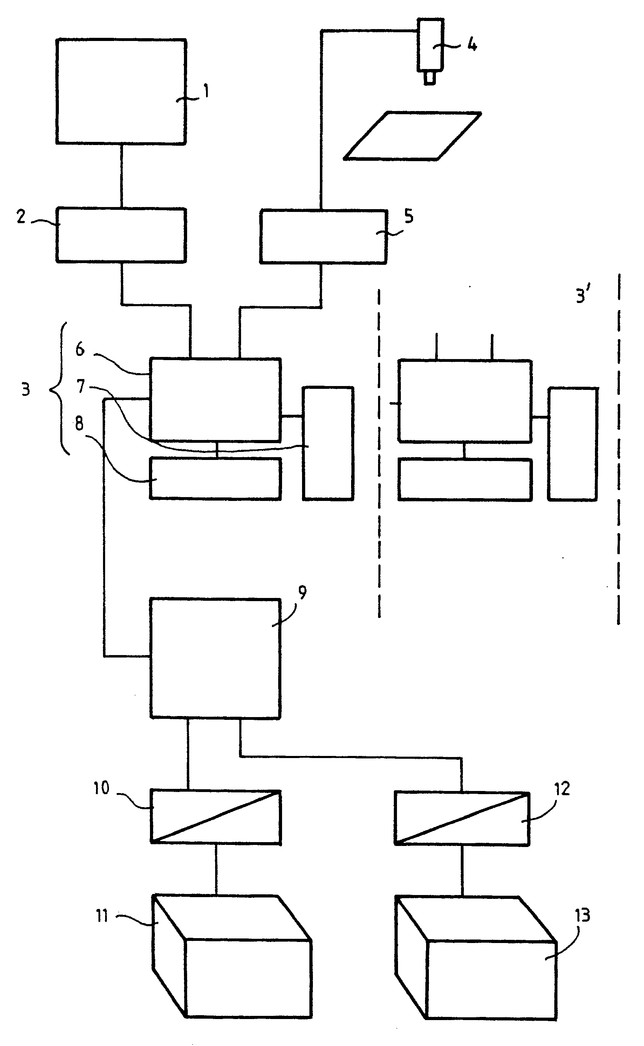

La présente invention sera décrite de façon plus détaillée à l'aide d'un exemple de réalisation d'un système de création d'images représenté schématiquement à l'unique figure annexée.

Selon la figure, le système de création d'images, notamment de maquettes pour l'impression de documents publicitaires, tels que des emballages, des étiquettes, etc..., se compose d'un moyen de balayage de lecture 1 relié, par l'intermédiaire d'une interface 2, à une console graphique 3. En parallèle à ce moyen 1, il y a un autre dispositif de lecture d'images en technique vidéo constitué par une caméra vidéo 4 également reliée à la console graphique 3 par une interface 5.

La console graphique 3 se compose d'un moniteur de contrôle 6, d'une table graphique 7 et d'un clavier 8.

Le système peut comporter en fait plusieurs consoles graphiques 3, 3', etc... branchées en parallèles de la console graphique 3 entre les dispositifs de lecture d'images et les parties du système en aval.

La console graphique 3 est reliée à un ordinateur de gestion 9 qui assure la gestion de la console graphique pour combiner les informations vidéo fournies par les dispositifs de lecture 1, 4 et les informations vectorielles fournies par la table graphique 7. Le programme de l'ordinateur de gestion 9 assure la combinaison de ces différents signaux pour restituer des informations destinées à la réalisation de la maquette.

En aval de l'ordinateur de gestion 9, le système comporte un moyen de rastérisation 10 relié à une imprimante 11 permettant de fournir une copie imprimée de la maquette préparée sur la console graphique 3.

En parallèle à l'imprimante 11, il est prévu également un moyen de balayage d'exposition 13 relié à l'ordinateur de gestion 9 par un moyen de tramage 12. Ce moyen d'exposition 13 permet de réaliser le film servant à la gravure ou autre.

Le moyen 1 et la caméra vidéo 4 permettent d'introduire dans le système des images numériques.

Ces images sont positionnées et visualisées dès leur introduction dans le système. Ces images peuvent être modifiées immédiatement à partir de la console graphique image, à l'aide d'instructions simples.

La console graphique image 3 permet de choisir telle ou telle partie des informations ainsi entrées dans le système par les dispositifs 1 ou 4 pour en choisir la totalité ou une partie, par augmentation, diminution ou conservation de l'échelle ou tout autre cadrage. Ces images constituent par exemple, le fond de la maquette à réaliser, des formes particulières, par exemple pour le remplissage de contours obtenus par la table graphique.

La console graphique image 3 permet également d'introduire des images conceptuelles ou vectorielles dans le système. Le tracé de ces images se fait par le choix de la figure géométrique ou autre parmi les diverses possibilités du système ; les dimensions et emplacement de la figure se font sur les instructions de l'opérateur.

Il en est de même du choix des couleurs, du remplissage des contours ou de la surface à l'extérieur des contours, etc...

La sélection des figures, leur forme et les dimensions des figures, ainsi que le remplissage du domaine délimité par le contour extérieur à celui-ci par une couleur, se font à l'aide du crayon de lecture de la table graphique.

En effet, le manipulateur choisit une figure géométrique, telle que, par exemple un cercle, un quadrilatère, etc... puis sur le dessin, il choisit des points par lesquels il veut faire passer cette figure géométrique et à l'aide du clavier, il commande l'exécution de ces instructions, c'est-à-dire le tracé de cette figure géométrique par les points choisis.

Le manipulateur choisit le cas échéant le remplissage du domaine délimité par cette figure ou le domaine complémentaire à celui-ci, c'est-à-dire extérieur, avec une couleur. Pour cela, il choisit d'abord le domaine en pointant celui-ci puis il introduit l'information par le clavier et il commande son exécution.

Puis, il effectue le choix de la couleur en pointant sur une palette la couleur souhaitée puis la surface précédemment choisie et enfin l'exécution de cette instruction.

Les ordres sont donnés à l'aide du crayon électronique et de la tablette graphique à l'exception des informations de dimensions et de texte.

La visualisation et le mélange des images se contrôlent en permanence sur le moniteur.

Lorsqu'une maquette est réalisée, l'utilisateur peut commander l'obtention de toute une gamme d'emballages ou d'étiquettes, suivant les produits emballés ou à traiter. Il peut ainsi former toute une gamme d'emballages pour connaître l'effet d'ensemble. Il pourrait également répéter les produits conditionnés pour apprécier l'effet de masse d'un tel emballage. Il peut enfin comparer son effet de masse par rapport à des conditionnements concurrents. Ces conditionnements concurrents peuvent en effet s'introduire simplement dans le système à l'aide par exemple de la caméra vidéo qui photographie le conditionnement d'un produit concurrent.

En fonction des résultats de cet examen, l'utilisateur pourra modifier la maquette en tenant immédiatement compte des défauts qu'il aura constatés et il pourra faire apparaître immédiatement la nouvelle maquette.

Le système permet de fournir à l'aide de l'imprimante ou du moyen d'exposition 13, des images sur support opaque ou transparent (papier, film etc...) des images de haute finition et qui résultent uniquement de dispositifs de lecture 1, 4 et des transformations, découpages et insertions réalisées au niveau de la console graphique image 3.

La définition et la qualité des images obtenues par les dispositifs 11, 13 sont au moins égales à celles des meilleurs produits actuels tels que :
- des maquettes d'emballages,
- des documents d'exécution noir et blanc,
- des épreuves noir et blanc ou couleur de contrôle,
- des films graphiques positif ou négatif prêts ou à être utilisés par le graveur ou le copiste.

Les films graphiques peuvent être prévus aux normes des flexographes, héliograveurs, sérigraphes, typographes et offsétistes pour satisfaire à tous les besoins des imprimeurs d'emballages.

Le logiciel du système permet d'effectuer en plus du travail habituel, des traitements augmentant la finesse et la qualité des images notamment par un traitement de particuliers tels que les images-traits, les images en demi-ton en héliogravure autotype.

A) Images traits -

Pour assurer les débits d'encre importants des aplats, on utilise des trames à linéature faible et pour les textes ou graphismes fins, on privilégie le pouvoir de définition des trames à linéature élevée.

Selon l'invention, on pourra utiliser des trames de linéature différente, sur un même film.

En fonction du comportement de l'encre sur le support (absorption, étalement, opacité...), on utilise des creux de gravure adaptés à l'usage final du cylindre gravé.

Par expérience, on sait que le "pont" de gravure doit être obligatoirement maintenu entre 15-20 microns après gravure, quel que soit le creux désiré.

En conséquence, le film de gravure doit comporter des distances interpoints fixes, constantes, liées aux creux de gravure désirée, liées au temps de gravure, liées à la gravure latérale, accompagnant la gravure principale, indépendamment de la ou des linéatures choisies.

Actuellement, on utilise six linéatures de trame, par ordre décroissant :

6 l / mn
7 l / mn
4 l / mn
8 l / mn
9 l / mn
0,6 l / mn

L'invention permet d'améliorer la définition de l'image. En effet, actuellement, toute image-trait en héliogravure est tramée. A l'impression, ses bords présentent obligatoirement les "dentelures" de la trame qui diminuent la définition de l'image trait.

Un filet qui cerne l'image trait (épaisseur d'un point élémentaire = pel) distant d'un pel, améliore la définition de l'image.

De plus, on constate qu'à valeur d'interpoint constant, les ponts entre alvéoles, après gravure, sont plus forts dans le centre des aplats que dans les bords.

Pour compenser cet effet, l'invention augmente systématiquement sur un nombre déterminé de rangs de points, l'interpoint d'une valeur ajustable.

L'utilisation des possibilités ci-dessus permet de limiter l'usage des trames à linéatures différentes.

Enfin, contrairement à l'habitude professionnelle, selon laquelle les trames traits sont orientées à 45° C par rapport à la génératrice du futur cylindre, l'invention permet de travailler parallèlement à cette même génératrice.

B) Image en demi-ton en héliogravure autotype -

Dans une telle image, on distingue trois parties :

- les ombres,
- les lumières hautes,
- la zone intermédiaire.

Dans la partie la plus sombre d'une illustration (ombres), la valeur de l'interpoint est fixée pour le creux de gravure qui est déterminé (comme le trait).

Dans ces parties à hautes lumières de l'image, la première densité imprimable est fournie par un point de 10 X 10 microns, soit sur le film 1 pel x 1 pel.

L'image imprimée est d'autant meilleure que le contraste image imprimée est grand.

Le meilleur résultat a été obtenu par l'emploi d'une trame à double linéature :

- linéature élevée dans les hautes lumières : ......................... 6 l / mn
- linéature + faible dans les ombres.. 5 l / mn (par exemple)

L'image de cette double linéature permet de provoquer une moindre cassure de la courbe de reproduction vers 50 % : une image est plus nette, car plus contrastée.

Ainsi, en résumé, l'invention transforme des images réelles-trait en pixel, puis, en vecteur pour être manipulées à volonté, tandis que les images en demi-ton, réelles, seront transformées en pixel ; elles sont très peu manipulées et sont superposées (plan différent) aux images vectorielles graphiques.

Elles suivent un parcours parallèle aux images vectorielles, sans mélange et ne sont associées qu'avant tramage par un logiciel spécial sur un calculateur particulier.

## Revendications

**1.** Système de création d'images en couleurs, notamment de maquettes pour l'impression de documents publicitaires, tels que des emballages, des étiquettes , etc., et leur simulation avec déclinaison de la gamme d'un emballage et sa mise en situation, qui comprend :

- au moins un dispositif de lecture d'images (1, 4) en technique vidéo ;
- au moins une console graphique image (3) avec un clavier de commande (8) pour la composition des textes, une table graphique (7), un crayon électronique pour la commande du logiciel de manipulation d'images en couleur apparaissant sur un écran couleur (6) pour le contrôle et la simulation ;
- un ordinateur de gestion (9) de la console (3) ;
- des moyens de tramage ;
- des moyens d'impression en polychromie, notamment en quadrichromie de l'image sur des supports : papier, film, métal, . . . ;

système caractérisé en ce que :

- les moyens de lecture (1, 4) sont constitués par un moyen de balayage (1) et une caméra vidéo (4) ;
- les moyens de tramage (9, 10, 12) pour les images trait et dégradées assurent la fragmentation des images en points de surface variable et espacés suivant une ou plusieurs linéatures avec des trames mono ou multilinéaires, qui comportent des points de dimensions différentes en bord d'aplat et des graphismes et des textes avec ou sans filet contour ;
- les moyens de tramage composant chaque point de trame ou ligne de filet contour par un ensemble de points élémentaires positionnés par le pilotage du pinceau lumineux issu de la source laser du système d'impression (13) ;
- l'ordinateur de gestion (9) de la console graphique (3) combine les images réelles couleur ou monochrome qui sont numérisées par les moyens de lecture (1, 4) avec images vectorielles provenant des instructions données à l'ordinateur à l'aide du clavier (8), de la tablette graphique (7) et du crayon électronique, le moyen d'impression (11) est une imprimante couleur fournissant des tirages sur papier, film, métal, . . . d'une qualité suffisante pour réaliser des emballages simulés utilisables pour les tests consommateur et servir d'épreuve pour bon à tirer à l'imprimeur, le système recevant toute image existante pour la travailler et la combiner à d'autres images existant également introduites dans le système par les moyens de lecture (1, 4), le clavier (8), la tablette graphique (7) et le crayon électronique pour en prendre des etraits, modifier l'échelle, le découpage, le contraste, les couleurs, insérer des inscriptions et des figures géométriques, effectuer des décalages, rotations, translation d'une par tie ou de la totalité de l'image, etc. . . et former sur l'écran couleur (6) des images correspondant à l'image à imprimer ou simuler des effets de présentation ou des effets de masse de l'image ainsi créée puis de l'imprimer par le moyen d'impression (11).

2. Système de création d'images à haute résolution selon la revendication 1, caractérisé en ce que le moyen d'impression (13) est un scanner d'impression comportant un pilotage du pinceau lumineux, d'une dimension égale à 5 $\mu$ ou inférieur, pour former une image tramée avec une ou plusieurs trames, mono ou multilinéaires, avec des points de dimensions différentes en bord d'aplat, avec des graphismes ou des textes tramés comportant un filet contour.

## Claims

1. System for the creation of colour images, particularly for mock-ups for the printing of publicity documents, such as packages, labels, etc, and for simulating them with variation of the range of a packaging and its positioning, which comprises:
   - at least one device for reading images (1, 4) using video techniques;
   - at least one image graphics console (3) with a control keyboard (8) for composing the texts, a graphics table (7), an electronic pencil for controlling the software for manipulating colour images appearing on a colour screen (6) for checking and simulation;
   - a computer (9) for managing the console (3);
   - screening means;
   - means for multicolour printing, particularly in four colours, of the image on base materials: paper, film, metal, etc;
   system characterised in that:
   - the reading means (1, 4) consist of a scanning means (1) and a video camera (4);
   - the screening means (9, 10, 12) for the line and shaded images break up the images into points with variable areas spaced apart in accordance with one or more line spacings with single or multiline half tones, which have points of different dimensions in a solid border and graphics and texts with or without a border;
   - the screening means composing each half tone point or border line by means of a set of elemental points positioned by the controlling of the light pencil originating from the laser source of the printing system (13);
   - the computer (9) managing the graphics console (3) combines the actual colour or monochrome images which are digitised by the reading means (1, 4) with vector images originating from the instructions given to the computer by means of the keyboard (8), the graphics table (7) and the electronic pencil, the printing means (11) is a colour printer providing prints on paper, film, metal, etc, of sufficient quality to produce simulated packagings which can be used for consumer tests and serve as a test for the final proof for the printer, the system receiving any existing image in order to work on it and combine it with other existing images also introduced into the system by the reading means (1, 4), keyboard (8), graphics table (7) and electronic pencil in order to take extracts from it, change the scale, cutting, contrast or colours, insert lettering and geometric figures, carry out shifts, rotations or transposition of one part or all of the image, etc, and form on the colour screen (6) images corresponding t o the image to be printed or simulate effects of presentation or mass effects of the image thus created, and then print it by the printing means (11).

2. System for the creation of high resolution images according to claim 1, characterised in that the printing means (13) is a printing scanner incorporating a control for the light pencil, of a size equal to or less than 5 , in order to form a half tone image with one or more half tones, single or multiline, with points of different dimensions in a solid border, with half tone graphics or texts incorporating a border.

## Ansprüche

1. System zur Erzeugung von Farbbildern, insbesondere von ersten Skizzen zum Aufdruck von Reklamedokumenten, z.B. von Verpackungen, Zetteln oder dergleichen, und deren Simulation mit einer Abwandlung einer Verpackungskollektion und ihre Umsetzung, welches aufweist:

mindestens eine Bilder-Leseeinrichtung (1,4) in Videotechnik;

mindestens eine Grafikbildkonsole (3) mit einer Eingabetastatur (8) für die Zusammenstellung von Texten, einem Grafiktablett (7), einem elektronischen Griffel zur Handhabung einer auf einem Farbbildschirm (6) erscheinenden Farbbildmanipulationslogik zur Steuerung der Simulation;

eine Computerverwaltung (9) der Konsole (3);

Rasterungsmitteln;

Mittel zum Druck in mehreren Farben, insbesondere in vier Farben, von einem Bild auf Trägerelementen: Papier, Film, Metall...;

welches System dadurch charakterisiert ist,

daß die Leseelemente (1,4) aus einem Abtastelement (1) und einer Videokamera (4) bestehen;

daß die Rasterungsmittel (9,10,12) für die behandelten und farblich abgestimmten Bilder die Aufteilung der Bilder in Punkte veränderlicher Oberfläche und Räume gemäß einer oder mehreren Zeilenzahlen mit einfachen oder mehrzeiligen Rastern sicherstellen, welche Punkte verschiedene Abmessungen im Rand eines gleichmäßigen Farbtones aufweisen und grafische Elemente und Texte mit oder ohne Netzkontur;

daß die Rasterungsmittel jeden Punkt des Rasters oder Linie der Netzkontur durch einen Komplex von elementaren Punkten, die durch Führung eines aus einer Laserquelle des Drucksystems (13) hervorgegangenen Lichtbündels positioniert sind, ersetzen;

daß die Computerverwaltung (9) der Grafikkonsole (3) die tatsächlichen Farb- oder Monochrombilder, die durch das Lesemittel (1,4) digitalisiert sind, mit vectoriellen Bildern, die aus den Angaben hervorgehen, welche dem Computer mit Hilfe der Tastatur (8), dem Grafiktablett (7) oder dem elektronischen Griffel gegeben worden sind, verbindet, wobei das Druckmittel (11) ein Farbschnelldrucker ist, der Abzüge auf Papier, Film, metallischer Fläche... liefert, in einer Qualität, die ausreichend ist, um für die Verbrauchertests benutzt zu werden und um als Muster für gute Abzüge für den Drucker zu dienen, wobei das System jedes bestehende Bild aufnimmt, um es zu verarbeiten und mit anderen bestehenden Bildern zu kombinieren, die in gleicher Weise in das System eingegeben worden sind mit Hilfe der Lesemittel (1,4) der Tastatur (8), dem Grafiktablett (7) und dem elektronischen Griffel, um daraus Auszüge zu erstellen, Änderungen vorzunehmen, hinsichtlich des Maßstabes, eines Ausschnittes, des Kontrastes der Farben, um Beschriftungen und geometrische Figuren einzufügen, um eine Verschiebung durchzuführen, Drehungen, eine Translation eines Teiles oder der Gesamtheit des Bildes... und um auf dem Farbbildschirm (6) Bilder zu erzeugen, die demjenigen entsprechen, das gedruckt werden soll oder Präsentationseffekte zu simulieren oder Mengeneffekte des so geschaffenen Bildes, um es dann mit Hilfe des Druckelementes (11) zu drucken.

2. System zur Schaffung von Bilder hoher Auflösung nach Anspruch 1, dadurch gekennzeichnet, daß das Druckelement (13) ein Druckerscanner ist, der eine Lichtbündelführung besitzt, in einer Abmessung von $5\mu$ oder kleiner, um ein gerastertes Bild zu schaffen mit einer oder mehreren Raster, ein- oder vielzeilig, mit Punkten unterschiedliche Abmessungen im Rande eines gleichmäßigen Farbbereiches, mit Grafikelementen oder Texten, die gerastert sind, die eine Netzkontur aufweisen.